# EUROPEAN PATENT APPLICATION

(11) **EP 3 670 030 A1**
(43) Date of publication of application: **24.06.2020**
(21) Application number: 18214126.7
(22) Date of filing: 19.12.2018
(51) Int. Cl.: B22F 3/105, B22F 3/15, B33Y 10/00, B33Y 30/00

(54) **METHOD AND SYSTEM FOR GENERATING A THREE-DIMENSIONAL WORKPIECE**

(71) Applicant: Linde GmbH, 82049 Pullach (DE)
(72) Inventor: Foret, Pierre, 80796 München (DE); Hryha, Eduard, 41679 Göteborg (SE); Pauzon, Camille, 85764 Oberschleißheim (DE); Wiberg, Sören, 17835 Ekerö (SE)

(57) **Abstract**

According to the present invention a method for generating a three-dimensional workpiece is provided, wherein the method comprises the following steps:
producing a workpiece via additive manufacturing process, wherein Helium is used as a protective/shielding gas during the additive manufacturing process, and wherein Helium is trapped in pores of the material of the work piece,
treating the workpiece with a hot isostatic pressing process, wherein Helium diffuses out of the material of the component so that a high density part is achieved.

## Description

The present invention relates to a method and a system for generating a three-dimensional workpiece.

The main differences between processes for additive manufacturing (AM) are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies.

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in SLM the material is fully melted rather than sintered, allowing different properties (crystal structure, porosity, and so on). SLS involves the use of a high power laser (for example, a carbon dioxide laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed.

Selective laser melting (SLM) is a particular rapid prototyping, 3D printing, or Additive Manufacturing (AM) technique designed to use a high power-density laser to melt and fuse metallic powders together. In many SLM is considered to be a subcategory of Selective Laser Sintering (SLS). The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen at oxygen levels below 500 parts per million. Once each layer has been distributed, each 2D slice of the part geometry is fused by selectively melting the powder. This is accomplished with a high-power laser beam, usually an ytterbium fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Electron-beam additive manufacturing or electron-beam melting (EBM) is a type of additive manufacturing, or 3D printing, for metal parts. The raw material (metal powder or wire) is placed under a vacuum and fused together from heating by an electron beam. This technique is distinct from selective laser sintering as the raw material fuses having completely melted. Metal powders can be consolidated into a solid mass using an electron beam as the heat source. Parts are manufactured by melting metal powder, layer by layer, with an electron beam in a high vacuum. This powder bed method produces fully dense metal parts directly from metal powder with characteristics of the target material. The EBM machine reads data from a 3D CAD model and lays down successive layers of powdered material. These layers are melted together utilizing a computer-controlled electron beam. In this way it builds up the parts. The process takes place under vacuum, which makes it suited to manufacture parts in reactive materials with a high affinity for oxygen, e.g. titanium. The process is known to operate at higher temperatures (up to 1000 °C), which can lead to differences in phase formation though solidification and solid-state phase transformation.

Selective heat sintering (SHS) is a type of additive manufacturing process. It works by using a thermal print head to apply heat to layers of powdered thermoplastic. When a layer is finished, the powder bed moves down, and an automated roller adds a new layer of material which is sintered to form the next cross-section of the model. SHS is best for manufacturing inexpensive prototypes for concept evaluation, fit/form and functional testing. SHS is a Plastics additive manufacturing technique similar to selective laser sintering (SLS), the main difference being that SHS employs a less intense thermal print head instead of a laser, thereby making it a cheaper solution, and able to be scaled down to desktop sizes.

Direct metal laser sintering (DMLS) is an additive manufacturing metal fabrication technology, occasionally referred to as selective laser sintering (SLS) or selective laser melting (SLM), that generates metal prototypes and tools directly from computer aided design (CAD) data. It is unique from SLS or SLM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a .stl file is created and sent to the machine's computer program. The DMLS machine uses a high-powered 200 watt Yb-fiber optic laser. Inside the build chamber area, there is a material dispensing platform and a built platform along with a recoater blade used to move new powder over the built platform. The technology fuses metal powder into a solid part by melting it locally using the focused laser beam. Parts are built up additively layer by layer, typically using layers 20 micrometers thick.

In General additive manufacturing is a manufacturing technology that includes a methodology whereby a heat source melts a feedstock of material which is deposited onto a substrate. Computer control of the movement of the heat source, and the source of the feedstock, makes it possible to build complex components. In additive manufacturing the processing is not limited to the above-mentioned methods in which metal powders are processed but composites or polymers are processed. The heat source can include (but is not limited to) the already mentioned laser beam, an arc, or other plasma-based heat sources.

Hot isostatic pressing (HIP) is a manufacturing process, used to reduce the porosity of metals and increase the density of many ceramic materials. This improves the material's mechanical properties and workability.

The HIP process subjects a component to both elevated temperature and isostatic gas pressure in a high pressure containment vessel. The pressurizing gas most widely used is argon. An inert gas is used so that the material does not chemically react. The chamber is heated, causing the pressure inside the vessel to increase. Many systems use associated gas pumping to achieve the necessary pressure level. Pressure is applied to the material from all directions (hence the term "isostatic").

It is an object of the present invention to provide a method and a system for generating a three-dimensional workpiece having higher quality.

It is an object of the present invention to provide a method and a system for generating a three-dimensional workpiece with closed pores.

It is a further object of the present invention to provide a method and a system for generating a three-dimensional workpiece wherein pores in the workpiece do not reopen under fatigue conditions.

One or more of these problems are solved by a method according to independent claim 1 and by a system according to independent claim 7. Advantageous embodiments are defined in the sub-claims.

According to the present invention a method for generating a three-dimensional workpiece is provided, wherein the method comprises the following steps:
producing a workpiece via additive manufacturing process, wherein Helium is used as a protective/shielding gas during the additive manufacturing process, and wherein
Helium is trapped in pores of the material of the work piece,
treating the workpiece with a hot isostatic pressing process, wherein Helium diffuses out of the material of the component so that a high density part is achieved.

Additive Manufacturing processes, as for example Laser Powder Bed Fusion, use Argon or Nitrogen as protective or shielding gas. Workpieces produced by this method never achieve full density but present a slight porosity of 0,1-1%. This means that the pores inside the 3D printed parts represent typically 0,1 to 1 Vol-% of the complete volume.

This residual porosity can be eliminated by Hot Isostatic Pressing (HIP). HIP combines high temperature and high pressure to compact the material and close the pores.

The gas trapped in this porosity can be the protective gas used during printing, for example Argon. If Argon is trapped inside the pores, a hot isostatic pressing process (HIP) is not sufficient since Argon will not diffuse through the material of the workpiece. The pores will seem close after HIPing but will reopen under fatigue condition.

The inventors of the present invention have recognized that when preferably pure Helium is used as shielding gas during printing and processing the workpiece afterwards with HIP a high density of the workpiece can be achieved.

Within the scope of the present invention the term "pure" Helium means that it has a quality of 4.6 and above. This means 99,996 Vol.-% Helium and more.

When using Argon as a protective gas during additive manufacturing the Argon atoms are trapped inside the pores of the workpiece. After HIP the pores will reopen under fatigue condition. In contrast to this, when using Helium as a protective gas during additive manufacturing the Helium atoms are trapped inside the pores of the workpiece. After HIP the pores will not reopen under fatigue condition, since Helium as a small molecule will diffuse through the material of the workpiece.

Helium is chemically inert and monatomic in all standard conditions. Because of helium's relatively low molar (atomic) mass, its thermal conductivity, specific heat, and sound speed in the gas phase are all greater than any other gas except hydrogen. For these reasons and the small size of helium monatomic molecules, helium diffuses through solids at a rate three times that of air and around 65% that of hydrogen.

Helium (covalent radius 28 pm, Van-der-Waals-radius 140 pm), also in comparison to Argon (covalent radius 106 pm; Van-der-Waals-radius 188 pm), is a light and small molecule that diffuses easier.

With suitable laser- and build-parameters Helium can increase productivity and can also increase the porosity inside the part.

The invention combines the advantages of a higher productivity by using Helium during printing and
higher mechanical properties (especially fatigue) by achieving a full density after HIPing and pores will not reopen under fatigue conditions.

Preferably the additive Manufacturing process is a Laser Powder Bed Fusion Process comprising the following steps:
providing a metal powder on a built platform,
melting the metal powder with a heat source, and
repeating the aforementioned steps.

Selective laser melting (SLM) is also known as direct metal laser sintering (DMLS) or laser powder bed fusion (LPBF) as discussed in the introductory part above.

Preferably the hot isostatic pressing process comprises the following steps:
heating the workpiece in a high pressure containment vessel, and
pumping a gas into the vessel for achieving a predetermined pressure level.

The hot isostatic pressing process can comprises additionally the following step: cooling the workpiece with decreasing pressure and temperature.

Modern HIP systems can feature uniform rapid cooling (URC) which circulates lower temperature gas to cool the part at a controlled rate of up to 100°C/min. The HIP quenching technique cuts cycle time dramatically by shortening the cooling stage by as much as 80%. It also provides the benefit of combining heat treatment with HIP in a single step. The uniform rapid cooling restricts grain growth and thermal distortion of the parts and avoids surface contamination by using high purity argon gas.

The gas for achieving a predetermined pressure level during the hot isostatic pressing process can be Argon or Nitrogen, and wherein a chosen temperature is below approx. 0.8 x T solidus, to avoid having a liquid phase in the workpiece.

Before starting the additive manufacturing process the production chamber can also be purged with Helium. Thus Helium enters the manufacturing space, warms up, and accelerates into the gaseous phase whereby air is displaced from the manufacturing space.

As an alternative it is possible 1) to suck a vacuum and then inject Helium or 2) first purge with Argon and then inject Helium.

According to a further aspect of the present invention a system for generating a three-dimensional workpiece is provided comprising:
a device for additive manufacturing comprising:
   a powder delivery system comprising a storage cylinder for metal powder and an application device for applying the powder onto a built platform,
   a heat source which is a device for generating a plasma or an arc for melting the powder, and a
   Production cylinder for additive manufacturing using metal powders comprising a housing with a wall,
a lift table with a built platform disposed inside the wall of the housing,
wherein the wall of the housing and the built platform define a build space, and a device for feeding pure Helium to the manufacturing space is connected to the build space and/or to a process chamber of the device, and
a device for hot isostatic pressing comprising
a pressure vessel,
a heating device, and
a device for providing Argon to the pressure vessel.

The same advantages mentioned in connection with the method for generating a three-dimensional workpiece according to the present invention apply mutatis mutandis to the apparatus for additive manufacturing according to the present invention.

The device for hot isostatic pressing can comprises a compressor for building up the pressure, which is part of the device for providing Argon to the pressure vessel, and a uniform rapid cooling device which circulates lower temperature gas to cool the workpiece preferably at a controlled rate of up to 100°C/min.

The manufacturing space of the device for additive manufacturing to which the Helium is provided during additive manufacturing is a build space of a production cylinder defined by a wall of a housing of the production cylinder and a lift table with a built platform of a lift table disposed inside the wall of the housing, or in that the manufacturing space is a process chamber of an apparatus for additive manufacturing.

Furthermore, a device for feeding pure Helium can be provided comprising a storage vessel for a liquid inert cryogen and a feeding device like a pump for feeding the liquid inert cryogen to the manufacturing space.

An oxygen monitoring and controlling system can be provided for recirculating the gas flow in the device for additive manufacturing, wherein a consistent residual oxygen levels in the manufacturing space is kept via an oxygen trace analyzer, which is specifically calibrated to Helium and which is implemented into the gas recirculation so that an amount of Helium is known.

Furthermore it would be possible to use a Helium sensor in the manufacturing space for measuring the proportion of Helium in the manufacturing space , wherein the Helium sensor is connected to a control unit and the control unit is connected to the device for feeding Helium according to the ratio/volume measured by the Helium sensor.

The invention is explained below with the aid of an embodiment shown in the drawings. The drawing shows in:
- Figure 1: a rough schematic view of a device for additive manufacturing of a system for generating a three-dimensional workpiece according to the present invention, and
- Figure 2: a rough schematic view of a device for hot isostatic pressing of a system for generating a three-dimensional workpiece according to the present invention.

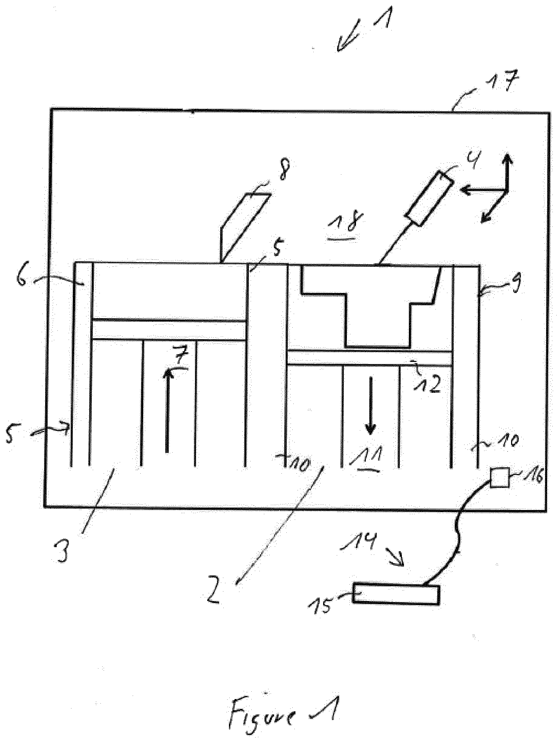

Hereinafter an apparatus for additive manufacturing 1 of a system for generating a three-dimensional workpiece according to the present invention is explained in detail (Figure 1).

The apparatus 1 comprises a production cylinder 2, a delivery cylinder 3 and a heat source 4.

The heat source 4 according to a preferred embodiment comprises a laser and a corresponding scanner system for melting metal powder (not shown).

The delivery cylinder 3 comprises a housing 5 with a wall 6 wherein a powder delivery piston 7 is disposed inside the housing 5.

A powder applying device 8, for example a roller, is provided for pushing a metal powder from the delivery cylinder 3 to the production cylinder 2.

The production cylinder 3 comprises a housing 9 with a wall 10.

A lift table 11 with a built platform 12 is disposed inside the wall 10 of the housing 9. The lift table 11 and the corresponding built platform 12 embody a fabrication piston.

The wall 10 of the housing 9 and the built platform 12 of the lift table 11 of the production cylinder 2 define a built space 13.

The built space 13 houses the fabrication powder bed and therefore the object being fabricated.

The built platform 12 can be an integral part of the lift table 11 of the fabrication piston or a separate part connected to the lift table 11.

Furthermore a processing chamber 17 is provided surrounding the production cylinder 2, the delivery cylinder 3 and the heat source 4.

The manufacturing space 18 according to the present invention is therefore the build space 13 of the production cylinder 2 defined by the 10 wall of the housing 9 of the production cylinder 2 and the lift table 11 with the built platform 12 disposed inside the wall 10 of the housing 9, and/or the manufacturing space is the room within the processing chamber 17.

Furthermore a device 14 for feeding pure Helium to the manufacturing space is connected to the processing chamber 17 of the apparatus 1.

The device 14 for feeding pure Helium comprises a storage vessel 15 for pure Helium and a feeding device 16 for feeding the Helium to the manufacturing space 18.

Furthermore a Helium sensor (not shown) for measuring the proportion of Helium in the manufacturing space 18 is provided in the manufacturing space 18.

The Helium sensor is connected to a control unit (not shown) and the control unit is connected to the device 14 for feeding pure Helium for controlling the device 14 for feeding Helium according to the value measured by the Helium sensor.

In the simplest type of an automatic control loop, a controller compares a measured Helium value of the process with a desired set value, and processes the resulting error signal to change some input to the process, in such a way that the process reaches the set Helium point despite disturbances.

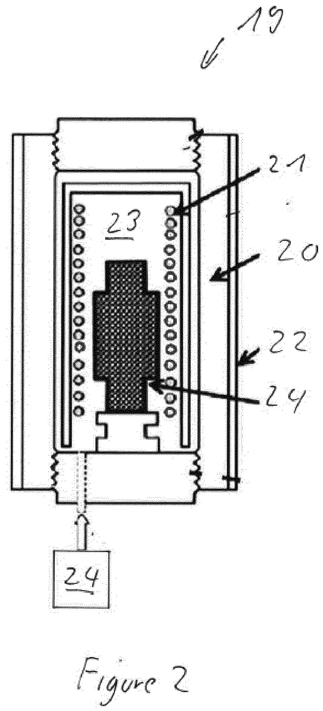

Hereinafter an apparatus for additive manufacturing 1 of a system for generating a three-dimensional workpiece according to the present invention is explained in detail (Figure 2).

The device for hot isostatic pressing 19 comprises a pressure vessel 20, which is a high pressure cylinder.

A heating device 21 having heating coils is disposed in a housing 22 of the pressure vessel 20 surrounding a pressure space 23 in which a workpiece 24 is disposed. a device for providing Argon to the pressure vessel

Furthermore a device 24 for providing Argon to the pressure vessel is provided. A compressor (not shown) for building up the pressure can be part of the device for providing Argon to the pressure vessel.

A uniform rapid cooling device (not shown) which circulates lower temperature gas to cool the workpiece preferably at a controlled rate of up to 100°C/min is also provided. During the hot isostatic pressing process, the temperature, argon-gas pressure and holding time will vary depending on the material types.

Unless otherwise stated, all technical features described in connection with the embodiments of the apparatus are applicable in connection with method steps for the method according to the present invention.

According to the present invention a method for generating a three-dimensional workpiece is provided.

In a first step a workpiece is formed by additive manufacturing preferably by a Laser Powder Bed Fusion Process comprising the following steps:
providing a metal powder on a built platform, wherein Helium is used as a
protective/shielding gas during the additive manufacturing process,
melting the metal powder with a heat source, wherein Helium is trapped in pores of the material of the work piece, and
repeating the aforementioned steps.

By this method for additive manufacturing a part is built by selectively sintering or melting a material and building a part additively layer by layer using a heat source sintering or melting the material, wherein the process can be conducted in a process chamber which is fed with pure helium as a protective gas,

An oxygen monitoring and controlling system is provided for recirculating the gas flow in the device for additive manufacturing, wherein a consistent residual oxygen levels in the manufacturing space is kept via an oxygen trace analyzer, which is specifically calibrated to Helium and which is implemented into the gas recirculation so that a residual oxygen level in the device for additive manufacturing is measured and accordingly an amount Helium is known.

In a second step the workpiece is treated with a hot isostatic pressing process comprising the following steps:
heating the workpiece in a high pressure containment vessel, and
pumping Argon into the vessel for achieving a predetermined pressure level wherein Helium diffuses out of the material of the workpiece so that a high density part is achieved,
cooling the workpiece with decreasing pressure and temperature.

After filling and closing, the HIP vessel is evacuated to eliminate the air. Then, while heating up, Argon gas pressure is increased in the vessel. After reaching the calculated pressure, the increase in pressure is done through gas thermal expansion. In the holding time, gas pressure and temperature are constant.

After this, a rapid cooling takes place, with decreasing pressure and temperature.

When using Helium as a protective gas during additive manufacturing the Helium atoms are trapped inside the pores of the workpiece. After HIP the pores will not reopen under fatigue condition, since Helium as a small molecule will diffuse through the material of the workpiece.

Helium is chemically inert and monatomic in all standard conditions. Because of helium's relatively low molar (atomic) mass, its thermal conductivity, specific heat, and sound speed in the gas phase are all greater than any other gas except hydrogen. For these reasons and the small size of helium monatomic molecules, helium diffuses through solids at a rate three times that of air and around 65% that of hydrogen.

A chosen temperature is below approx. 0.8 x T solidus, to avoid having a liquid phase.

The gas used is generally Argon but in special applications, other gases or gas mixtures are used.

The rise in pressure is built up with a compressor.
The gas pressure is equal inside and outside the insulation. But the gas density is higher outside the insulation than inside because of the lower temperature.

Modern HIP systems can feature uniform rapid cooling (URC) which circulates lower temperature gas to cool the part at a controlled rate of up to 100°C/min. The HIP quenching technique cuts cycle time dramatically by shortening the cooling stage by as much as 80%. It also provides the benefit of combining heat treatment with HIP in a single step. The uniform rapid cooling restricts grain growth and thermal distortion of the parts and avoids surface contamination by using high purity argon gas.

Molybdenum furnaces are used for temperatures up to 1350°C and carbon graphite/tungsten furnaces up to 2200°C. Inside the pressure vessel, insulation (ceramic fibers and Molybdenum sheets) is used to protect the steel pressure vessel against the heat and to hold the high temperature inside the insulation. The bottom, cover and pressure vessel are water cooled to protect the sealing ring and the vessel against the heat.

### List of Reference Numbers

- 1: device for additive manufacturing
- 2: production cylinder
- 3: delivery cylinder
- 4: heat source
- 5: housing
- 6: wall
- 7: powder delivery piston
- 8: powder applying device
- 9: housing
- 10: wall
- 11: lift table
- 12: built platform
- 13: build space
- 14: device for feeding Helium
- 15: storage vessel
- 16: feeding device
- 17: processing chamber
- 18: manufacturing space
- 19: device for hot isostatic pressing
- 20: pressure vessel
- 21: heating device
- 22: housing
- 23: pressure space
- 24: device for providing Argon

## Claims

1. Method for generating a three-dimensional workpiece comprising the following steps:
producing a workpiece via additive manufacturing process, wherein Helium is used as a protective/shielding gas during the additive manufacturing process, and wherein Helium is trapped in pores of the material of the work piece,
treating the workpiece with a hot isostatic pressing process, wherein Helium diffuses out of the material of the workpiece so that a high density part is achieved.

2. Method according to claim 1,
**characterized in that**,
the additive Manufacturing is a Laser Powder Bed Fusion Process comprising the following steps:
providing a metal powder on a built platform,
melting the metal powder with a heat source, and
repeating the aforementioned steps.

3. Method according to claim 1 or 2,
**characterized in that**
the hot isostatic pressing process comprises the following steps:
heating the workpiece in a high pressure containment vessel, and
pumping a gas into the vessel for achieving a predetermined pressure level.

4. Method according to one of the claims 1 to 3,
**characterized in that**,
the hot isostatic pressing process comprises additionally the following step:
cooling the workpiece with decreasing pressure and temperature.

5. Method according to one of the claims 1 to 4,
**characterized in that**,
the gas for achieving a predetermined pressure level during the hot isostatic pressing process is Argon or Nitrogen and wherein a chosen temperature is below approx. 0.8 x T solidus, to avoid having a liquid phase in the workpiece.

6. System for generating a three-dimensional workpiece comprising:
a device for additive manufacturing comprising:
a powder delivery system comprising a storage cylinder for etal powder and an application device for applying the powder onto a built platform,
a heat source which is a device for generating a plasma or an arc for melting the powder, and a
Production cylinder for additive manufacturing using metal powders comprising a housing with a wall,
a lift table with a built platform disposed inside the wall of the housing,
wherein the wall of the housing and the built platform define a build space, and
a device for feeding pure Helium to the manufacturing space is connected to the build space and/or to a process chamber of the device, and
a device for hot isostatic pressing comprising
a pressure vessel,
a heating device, and
a device for providing Argon to the pressure vessel

7. System according to claim 6,
**characterized in that**,
that the device for hot isostatic pressing comprises
a compressor for building up the pressure, which is part of the device for providing Argon to the pressure vessel, and a
uniform rapid cooling device which circulates lower temperature gas to cool the workpiece preferably at a controlled rate of up to 100°C/min.

8. System according to claim 6 or 7,
**characterized in that**,
the that the manufacturing space of the device for additive manufacturing is a build space of a production cylinder defined by a wall of a housing of the production cylinder and a lift table with a built platform of a lift table disposed inside the wall of the housing, or **in that** the manufacturing space is a process chamber of an apparatus for additive manufacturing.

9. System according to claims 6 to 8,
**characterized in that**,
that a device for feeding pure Helium can is provided comprising a storage vessel for a liquid inert cryogen and a feeding device like a pump for feeding the liquid inert cryogen to the manufacturing space.

10. System according to claims 6 to 9,
**characterized in that**,
that an oxygen monitoring and controlling system is provided for recirculating the gas flow, wherein a consistent residual oxygen levels in the manufacturing space is kept via an oxygen trace analyzer, which is specifically calibrated to Helium and which is implemented into the gas recirculation so that a residual oxygen level in the device for additive manufacturing is measured and accordingly an amount of Helium is known.
